# EUROPÄISCHE PATENTSCHRIFT

(11) **EP 3 570 164 B1**
(45) Veröffentlichungstag und Bekanntmachung des Hinweises auf die Patenterteilung: **26.04.2023**
(21) Anmeldenummer: 18172147.3
(22) Anmeldetag: 14.05.2018
(51) Int. Cl.: G06F 9/451, G06F 8/38, G06F 8/76

(54) **VERFAHREN UND SYSTEM ZUM GENERIEREN EINER MOBILEN APPLIKATION AUS EINER DESKTOP-ANWENDUNG**
METHOD AND SYSTEM FOR GENERATING A MOBILE APPLICATION FROM A DESKTOP APPLICATION
PROCÉDÉ ET SYSTÈME DE GÉNÉRATION D'UNE APPLICATION MOBILE À PARTIR D'UNE APPLICATION BUREAU

(43) Veröffentlichungstag der Anmeldung: 20.11.2019
(73) Patentinhaber: Schneider Electric Industries SAS, 92500 Rueil-Malmaison (FR)
(72) Erfinder: HIESER, Alexander, 97877 Wertheim (DE); ZINN, Marcus, 63110 Rodgau (DE); PATRI, Michael, 63741 Aschaffenburg (DE)
(74) Vertreter: Stoffregen, Hans-Herbert

(56) Entgegenhaltungen:
- US-A1- 2012 229 499
- US-A1- 2014 164 944
- US-B1- 8 160 564

## Beschreibung

Die Erfindung bezieht sich auf ein Verfahren zum Generieren einer mobilen Applikation mit einer auf einem Display eines mobilen Gerätes darstellbaren interaktiven grafischen Benutzeroberfläche aus einer Desktop-Anwendung sowie auf ein System zur Durchführung des Verfahrens.

Ein Verfahren und ein System zur Steuerung einer Desktop-Anwendung mit einem mobilen Gerät ist in der US 2014/0165944 A1 beschrieben. Ein Generierungssystem für mobile Anwendungen ist so konfiguriert, dass es mit einem Unternehmensanwendungsserver und einem mobilen Gerät kommuniziert, um eine Unternehmensanwendung des Unternehmensanwendungsservers in eine mobile Anwendung zur Verwendung auf einem mobilen Gerät umzuwandeln.

Das Generierungssystem für mobile Anwendungen stellt Mittel bereit, z.B. einen visuellen Editor, damit ein Administrator Transformationsregeln für Layout-Typen von Ansichten- und/oder Benutzeroberflächen aus der Untemehmensanwendung erstellt. Die Transformationsregeln transformieren dann die Benutzeroberflächen oder Anwendungsansichten aus der Unternehmens anwendung zur Verwendung mit der mobilen Anwendung auf dem mobilen Gerät.

Es ist ein Extraktions- und Bedienmodul vorgesehen, das konfiguriert ist, um Benutzerschnittstellen, Daten- und Workflowelemente aus der Unternehmens anwendung zu extrahieren.

Dabei werden Logik und Code, Elemente, Grundelemente und Pixel extrahiert, indem auf eine Datenstruktur zugegriffen wird, die als Dokumenten-Objekt-Modell (DOM)-Baum bezeichnet wird.

Die US 8,160,564 B1 betrifft die Steuerung einer auf einem Desktop-Computer ausgeführten Desktop-Anwendung mit einem mobilen Gerät. Dabei erfasst das mobile Gerät ein Bild der Desktop-Anwendung, in dem ein Foto einer auf dem Bildschirm des Desktop-Computers angezeigten Benutzeroberfläche aufgenommen wird. Anschließend werden mittels des mobilen Geräts Informationen über Funktionen und Spezifikationen der Desktop-Anwendung von dem Desktop-Computer angefragt. Der Desktop-Computer stellt eine Bitmap-Darstellung der Desktop-Anwendung sowie eine oder mehrere benutzermanipulierbare Optionen wie Bedienelemente "Play", "Fast forward", "Rewind" u.a. bereit, die der Bitmap-Darstellung zugeordnet sind. Das mobile Gerät verknüpft die benutzermanipulierbaren Optionen mit korrespondierenden Bereichen des Bildes. Somit können Bedienelemente zugewiesen werden, um einem Benutzer eine Funktion zur Benutzung der Option zur Verfügung zu stellen.

Das mobile Gerät umfasst eine Bildverarbeitungssoftware, die ausgebildet ist, um Informationen über Spezifikationen anzufragen, die mit der Desktop-Anwendung verknüpft sind. Diese Informationen werden auf das erfasste Bild abgebildet. Die Bildverarbeitungssoftware ist des Weiteren ausgebildet, um die Optionen, die mit der Desktop-Anwendung verknüpft sind, mit einem Bereich der Abbildung und den Bedienelementen zu verknüpfen, damit ein Benutzer die Desktop-Anwendung per Fernsteuerung manipulieren kann.

Ferner weist das mobile Gerät eine Befehlsgenerator-Software auf, um eine Benutzereingabe auf dem mobilen Gerät in Befehle zu transformieren. Diese Befehle werden an den Desktop-Computer zur Verarbeitung übermittelt und lösen Aktionen in der Desktop-Anwendung aus.

Nachteilig bei dem bekannten Verfahren ist, dass ein Bild von der Desktop-Anwendung mit der Kamera des mobilen Gerätes aufgenommen werden muss. Dazu ist es zwingend erforderlich, dass sich der Benutzer des mobilen Gerätes in unmittelbarer Nähe der Desktop-Anwendung befindet, um ein Bild dieser aufnehmen zu können. Des Weiteren ist anzumerken, dass Reaktionen der Desktop-Anwendung auf Benutzereingaben nicht unmittelbar auf der Benutzeroberfläche des mobilen Geräts angezeigt werden können.

Des Weiteren sind aus dem Stand der Technik Verfahren bekannt, bei denen Bilder der Desktop-Anwendung z.B. mittels eines Remote-Desktop-Tools auf ein mobiles Gerät gestreamt und auf einem Display des mobilen Geräts angezeigt werden.

Da das Display des mobilen Geräts im Vergleich zu dem Desktop-Display kleiner ist, wird das gestreamte Bild auf dem kleineren Display entweder zu groß oder zu klein dargestellt.

Wenn das Bild zu groß dargestellt wird, ist nur ein kleiner Ausschnitt zu sehen, so dass die Übersicht verlorengeht und einzelne Bedienelemente nicht mehr genutzt werden können.

Wenn das Bild der Desktop-Anwendung an die Dimension des Displays des mobilen Geräts angepasst wird, dann werden Bildelemente sehr stark verkleinert, so dass die Bedienung durch eine Bedienperson, beispielsweise eine Handbedienung auf einem Touchscreen, ebenfalls nicht möglich ist.

Des Weiteren ist anzumerken, dass Desktop-Anwendungen üblicherweise nicht für TouchScreen-Eingaben optimiert sind, so dass selbst dann, wenn das Bild der Desktop-Anwendung auf dem mobilen Gerät angezeigt werden würde, eine Bedienung umständlich ist.

Davon ausgehend liegt der vorliegenden Erfindung die Aufgabe zugrunde, ein Verfahren und ein System der eingangs genannten Art derart weiterzubilden, dass die Darstellung einer Desktop-Anwendung auf dem Display eines mobilen Gerätes verbessert und die Bedienung der Desktop-Anwendung mittels des mobilen Gerätes vereinfacht wird.

Die Aufgabe wird erfindungsgemäß durch ein Verfahren mit den Merkmalen des Anspruchs 1 gelöst.

Das Verfahren umfasst die Verfahrensschritte:
Erfassen einzelner Bilder einer grafischen Benutzeroberfläche der Desktop-Anwendung mittels eines Videostreams,
Analyse der Bilder mittels Mustererkennung und Gliedern der Bilder in Desktop-Bildkomponenten,
Analyse der Desktop-Bildkomponenten mittels Mustererkennung und Erfassen von Eigenschaftsinformationen in Form von zumindest einer Position der Desktop-Bildkomponenten,
Transformieren der Desktop-Bildkomponenten durch Abbilden dieser auf vordefinierte äquivalente, an die Größe des Displays des mobilen Gerätes angepasste ausführbare Mobilgeräte-Komponenten mittels der Eigenschaftsinformationen und/oder Mustererkennungsinformationen,
Generieren der ausführbaren grafischen Benutzeroberfläche der mobilen Applikation aus den zugeordneten Mobilgeräte-Komponenten,
Erfassen einer Benutzerinteraktion mit einer der ausfahrbaren Mobilgeräte-Komponenten,
Transformieren der Benutzerinteraktion in eine Bildkoordinate der Desktop-Anwendung und Senden der Bildkoordinate zur Ausführung der zugeordneten Desktop-Komponente an die Desktop-Anwendung wobei
die Benutzerinteraktionen mit den ausführbaren Mobilgeräte-Komponenten der mobilen Applikation erfasst und mittels eines Event-Emitter-Tools transformiert und an die Desktop-Anwendung gesendet werden, und
Generieren einer aktualisierten und/oder neuen ausführbaren Mobilgeräte-Komponente für die mobile Applikation im laufenden Betrieb (on the fly) aus einem aktualisierten Bild des Videostreams als Reaktion auf die vorausgegangene Benutzerinteraktion.

Gemäß der Erfindung wird aus einem Videostream, welcher ein Bild einer grafischen Benutzeroberfläche der Desktop-Anwendung repräsentiert, eine grafische Benutzeroberfläche einer mobilen Anwendung erzeugt.

Dabei ist vorgesehen, dass Interaktionen des Benutzers mit Hilfe der mobilen Anwendung an die Desktop-Anwendung gesendet werden und dass dadurch hervorgerufene Veränderungen der grafischen Benutzeroberfläche der Desktop-Anwendung unmittelbar (on the fly) dementsprechende Veränderungen der grafischen Benutzeroberfläche der mobilen Anwendung erzeugen.

Gemäß einer bevorzugten Ausführung ist vorgesehen, dass das Bild in Desktop-Inhaltsbereiche (content areas) in Form von Anwendungsrahmen, Menübereichen, Textbereichen, Baumstrukturbereichen, Liststrukturbereichen und/oder Grafikbereichen als Desktop-Bildkomponenten gegliedert wird und dass in jedem der Desktop-Inhaltsbereiche benutzermanipulierbare Desktop-Steuerkomponenten wie Bildsymbole für Dateien und Programme (Icons), Schaltflächen (Buttons), Schieberegler (Scroll bars), Werkzeugleisten (Tool bars), Menüleisten (Menü bars) und/oder Dialogboxen, benutzermanipulierbare dynamische Desktop-Funktionskomponenten wie Baumstrukturen und/oder Listenstrukturen und/oder statische Desktop-Grafikkomponenten als Desktop-Bildkomponenten identifiziert werden. Durch obige Verfahrensweise kann die Bildanalyse systematisiert und vereinfacht werden.

Die bei der Mustererkennung ermittelten Eigenschaftsinformationen der Desktop-Bildkomponenten enthalten vorzugsweise Informationen über einen Typ, einen Status, eine Bezeichnung, einen Textbereich, eine zeitliche Statusänderung und/oder eine genaue Größe der Darstellung der Desktop-Bildkomponenten auf dem Desktop-Bildschirm.

Die durch Mustererkennung identifizierten Desktop-Bildkomponenten werden vorzugsweise mittels einer Abbildungsdatei (Mapping file) wie Abbildungsmatrix unter Berücksichtigung der Mustererkennungsinformationen und/oder Eigenschafts-Informationen auf die vordefinierten Mobilgeräte-Komponenten abgebildet.

Die vordefinierten Mobilgeräte-Komponenten können in Form von Quellcode-Vorlagen aus Basis-Bildkomponenten erstellt werden, die bei einer Bildanalyse von Bildern verschiedener Zustände der grafischen Benutzeroberfläche der Desktop-Anwendung identifiziert werden.

Das Bildanalyseverfahren wird vorzugsweise in aufeinander aufbauenden Schritten durchgeführt. In einem ersten Schritt der Bildanalyse wird ein Desktop-Inhaltsbereich z.B. in Form eines Anwendungsrahmens mit Anwendungstitel identifiziert. In einem zweiten Schritt kann in dem Desktop-Inhaltsbereich das Desktop-Steuer-, Desktop-Funktions- und/oder Desktop-Grafikelement identifiziert werden. In einem dritten Schritt kann dann der Anwendungsrahmen mit Anwendungstitel in einen äquivalenten Mobilgeräte-Anwendungsrahmen mit Anwendungstitel transformiert werden. Schließlich kann in einem vierten Schritt das identifizierte Desktop-Steuer-, Desktop-Funktions- und/oder Desktop-Grafikelement in ein äquivalentes ausführbares Mobilgeräte-Steuer-, Mobilgeräte-Funktions- und/oder Mobilgeräte-Grafikelement transformiert werden.

Die Mustererkennungsinformationen und/oder Eigenschaftsinformationen werden vorzugsweise durch eine Konfigurationsdatei bereitgestellt und können für eine manuelle Analyse und/oder Transformation und/oder Generierung unbekannter Desktop-Bildelemente aus dieser geladen werden.

Vorzugsweise wird die Analyse der Bilder, die Transformation der Desktop-Bildkomponenten und/oder Generierung der mobilen Applikation mittels einer Prozessoreinheit in einem Computergerät, einer Cloud-Umgebung oder in dem mobilen Gerät selbst ausgeführt.

Ferner bezieht sich die Erfindung auf ein Datenverarbeitungssystem zum Generieren einer auf einem Display eines mobilen Gerätes darstellbaren interaktiven grafischen Benutzeroberfläche aus einer auf einem Datenverarbeitungsgerät ausgeführten Desktop-Anwendung.

Die Aufgabe wird mit einem Datenverarbeitungssystem mit den Merkmalen des Anspruchs 8 gelöst.

Das Datenverarbeitungssystem umfasst: eine Bilderfassungseinheit in Form eines Streaming-Clients zum Erfassen einzelner Bilder einer grafischen Benutzeroberfläche der Desktop-Anwendung mittels eines Videostreams;
eine Bildanalyseeinheit zur Analyse der Bilder mittels Mustererkennung und zum Gliedern der Bilder in Desktop-Bildkomponenten, sowie zur Analyse der Desktop-Bildkomponenten mittels Mustererkennung und zum Erfassen von Eigenschaftsinformationen in Form von zumindest einer Position der Desktop-Bildkomponenten;
eine Transformationseinheit zum Transformieren der Desktop-Bildkomponenten durch Abbilden dieser auf vordefinierte äquivalente, an die Größe des Displays des mobilen Gerätes angepasste ausführbare Mobilgeräte-Komponenten mittels der Eigenschaftsinformationen und/oder Mustererkennungsinformationen;
eine Generatoreinheit zum Generieren der ausführbaren grafischen Benutzeroberfläche der mobilen Applikation aus den zugeordneten Mobilgeräte-Komponenten;
eine Erfassungseinheit in Form eines Event-Emitter-Tools, die ausgebildet ist, eine Benutzerinteraktion mit einer der ausführbaren Mobilgeräte-Komponenten zu erfassen, die Benutzerinteraktion in eine entsprechende Bildkoordinate der Desktop-Anwendung zu transformieren und zur Ausführung der zugeordneten Desktop-Komponente an die Desktop-Anwendung zu senden, und als Reaktion auf die Benutzerinteraktion eine aktualisierte und/oder neue ausführbare Mobilgeräte-Komponente für die mobile Applikation im laufenden Betrieb (on the fly) aus einem aktualisierten Bild des Videostreams zu generieren.

Das Datenverarbeitungssystem kann in dem mobilen Gerät oder in einer Cloud-Umgebung installiert sein.

Der Videostream ist eine Sequenz von einzelnen Bildern der grafischen Benutzeroberfläche der Desktop-Anwendung. Durch Änderung und/oder Aktualisierung der momentanen grafischen Benutzeroberfläche z. B. durch Interaktion wird ein neues Bild erzeugt. Die Bilder des Videostreams werden mittels eines Bildanalysators analysiert. Bei einer Änderung und/oder Aktualisierung des Bildes werden entsprechende Mobilgeräte-Komponenten der grafischen Benutzeroberfläche des mobilen Gerätes aktualisiert oder neu generiert.

Weitere Einzelheiten, Vorteile und Merkmale der Erfindung ergeben sich nicht nur aus den Ansprüchen, den diesen zu entnehmenden Merkmalen für sich und/oder in Kombination, sondern auch aus der nachfolgenden Beschreibung der den Figuren zu entnehmenden bevorzugten Ausführungsbeispiele.

Es zeigen:
- Fig. 1: ein Blockschaltbild eines Systems zur Transformation der Benutzeroberfläche einer Desktop-Anwendung in eine mobile Applikation eines mobilen Gerätes im laufenden Betrieb (on the fly),
- Fig. 2: ein schematisches Ablaufdiagramm von Verfahrensschritten zur Durchführung des Verfahrens,
- Fig. 3a: Verfahrensschritte zur Identifizierung von Desktop-Inhaltsbereichen der grafischen Benutzeroberfläche der Desktop-Anwendung,
- Fig. 3b: Verfahrensschritte zur Identifizierung von Desktop-Bildkomponenten wie Desktop-Steuer-, Desktop-Funktions- und/oder Desktop-Graphikkomponenten in den Desktop-Inhaltsbereichen,
- Fig. 3c: Verfahrensschritte zur Transformation der Desktop-Inhaltsbereiche in äquivalente, an das Display des mobilen Gerätes angepasste ausführbare Mobilgeräte-Komponenten wie Menükomponenten eines Hauptmenüs der grafischen Benutzeroberfläche der mobilen Anwendung,
- Fig. 3d: Verfahrensschritte zur Transformation der Desktop-Komponenten wie Desktop-Steuer-, Desktop-Funktions- und/oder Desktop-Graphikkomponenten in äquivalente Mobilgeräte-Komponenten wie Mobilgeräte-Steuer-, Mobilgeräte-Funktions- und/oder Mobilgeräte-Graphikkomponenten eines Untermenüs der grafischen Benutzeroberfläche der mobilen Anwendung,
- Fig. 4: Tabelle mit Informationen zur Transformation eines Desktop-Inhaltsbereichs oder einer Desktop-Bildkomponente in einen äquivalenten Mobilgeräte-Inhaltsbereich oder eine äquivalente Mobilgeräte-Komponente,
- Fig. 5: Verfahrensschritte zur Transformation einer Desktop-Steuerkomponente wie Button in eine entsprechende Mobilgeräte-Steuerkomponente der grafischen Benutzeroberfläche der mobilen Anwendung,
- Fig. 6: Verfahrensschritte zur Transformation einer Desktop-Steuerkomponente wie Button in eine entsprechende Mobilgeräte-Komponente auf Basis einer Konfigurationsdatei,
- Fig. 7: Verfahrensschritte zur Transformation einer Desktop-Funktionskomponente wie Baumansicht in eine entsprechende Mobilgeräte-Funktionskomponente wie Listenansicht der mobilen Anwendung,
- Fig. 8: Verfahrensschritte zur Transformation einer Desktop-Funktionskomponente wie Listenansicht in eine entsprechende Mobilgeräte-Funktionskomponente wie Listenansicht der mobilen Anwendung und
- Fig. 9: Verfahrensschritte zur Transformation einer Desktop-Grafikkomponente in eine entsprechende Mobilgeräte-Grafikkomponente wie Bildelement der mobilen Anwendung.

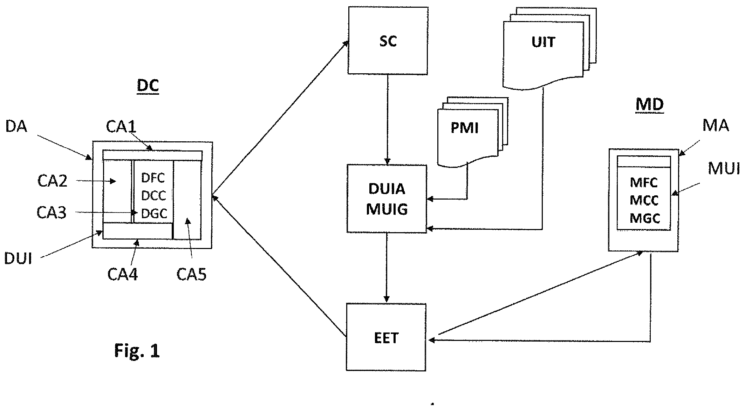

Fig. 1 zeigt rein schematisch eine Systemarchitektur in Form eines Blockschaltbildes zur Transformation einer grafischen Benutzeroberfläche DUI einer auf einem Computergerät wie Desktop-Computer DC ausgeführten Desktop-Anwendung DA in eine grafische Benutzeroberfläche MUI einer mobilen Anwendung MA, die auf einem mobilen Gerät MD ausgeführt wird.

Die grafische Benutzeroberfläche DUI der Desktop-Anwendung DA umfasst Desktop-Bildkomponenten in Form von zumindest einem Desktop-Inhaltsbereich CAl...CA5 wie z. B. einem Menübereich, einem Textbereich, einem Baumstrukturbereich, einem Listenbereich und/oder einem Grafikbereich, wobei in dem zumindest einen Desktop-Inhaltsbereich CA1...CA5 eine oder mehrere Desktop-Bildkomponenten DC in Form von z.B. einer Desktop-Steuerkomponente DCC wie Schaltfläche (Button), eine Desktop-Funktionskomponente DFC wie Baumstruktur oder Listenstruktur und/oder eine Desktop-Graphikkomponente DGC enthalten sein können.

Das System umfasst ferner eine Bilderfassungseinheit wie Streaming-Client SC, der ausgebildet ist, einzelne Bilder der grafischen Benutzeroberfläche DUI der Desktop-Anwendung DA zu streamen.

Die gestreamten Bilder werden in einer Bildanalyseeinheit DUIA mit einer Bildverarbeitungssoftware zur Identifizierung der Desktop-Bildkomponenten in Form der Desktop-Inhaltsbereiche CA1...CA5 sowie zur Erkennung der Desktop-Steuer-, Desktop-Funktions- und Desktop-Graphikkomponenten DCC, DFC, DGC innerhalb der Desktop-Inhaltsbereiche CAl...CA5 der grafischen Benutzeroberfläche DUI analysiert.

Der Bildanalysator DUIA ist mit einem ersten Speicher gekoppelt, in dem Dateien PMI mit Mustererkennungsinformationen für eine Mustererkennung sowie einen Musterabgleich gespeichert sind.

Die in der grafischen Benutzeroberfläche DUI identifizierten Muster der Desktop-Inhaltsbereiche CA1...CA5 und/oder Desktop-Komponenten DCC, DFC, DGC werden unter Berücksichtigung der Mustererkennungsinformationen weiter analysiert, um Eigenschaftsinformationen der Desktop-Inhaltsbereiche und/oder Desktop-Komponenten zu erhalten.

Die identifizierten Desktop-Inhaltsbereiche und/oder Desktop-Komponenten werden mittels einer Abbildungsdatei (Mapping file) unter Berücksichtigung der Mustererkennungsinformationen und/oder Eigenschaftsinformationen auf äquivalente, an die Größe des Displays MUI des mobilen Gerätes angepasste Mobilgeräte-Komponenten MCC, MFC, MGC abgebildet. Die vordefinierten Mobilgeräte-Komponenten sind als Quellcode-Vorlage in einem Speicher UIT gespeichert.

Aus den äquivalenten ausführbaren Mobilgeräte-Komponenten MCC, MFC, MGC wird mittels eines Bildgenerators MUIG die ausführbare grafische Benutzeroberfläche MUI der mobilen Applikation MA erzeugt.

Ferner ist ein Event-Emitter-Tool EET vorgesehen, welches Eingaben bzw. Aktionen eines Benutzers auf einem Touch-Display des mobilen Gerätes MD erfasst und an die Desktop-Anwendung DA sendet.

Der Streaming-Client SC, der Bildanalysator DUIA, der Bildgenerator MUIG und das Event-Emitter-Tool EET können in dem mobilen Gerät MD, dem Desktop-Computer DC und/oder als Cloud- bzw. Web-Anwendung ausgebildet sein.

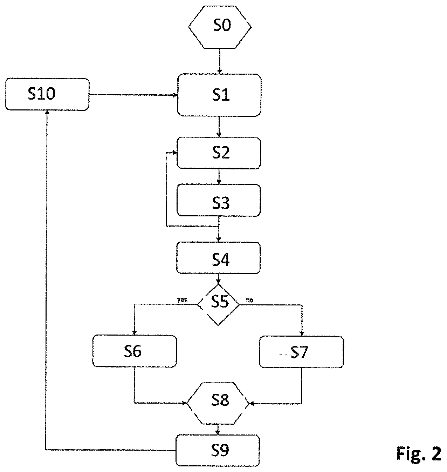

Fig. 2 zeigt ein Ablaufdiagramm mit einer prinzipiellen Verfahrensweise des erfindungsgemäßen Verfahrens. In einem Verfahrensschritts S0 wird mittels des Streaming-Clients SC ein Videostream der grafischen Benutzeroberfläche DUI der Desktop-Anwendung DA empfangen. Aus dem Videostream werden Bilder bzw. Frames z.B. mittels einer Einzel-Bild-Funktion erfasst.

Ein Bild der grafischen Benutzeroberfläche DUI wird in einem Verfahrensschritt S1 in dem Bildanalysator DUIA mittels einer Bildverarbeitungssoftware analysiert.

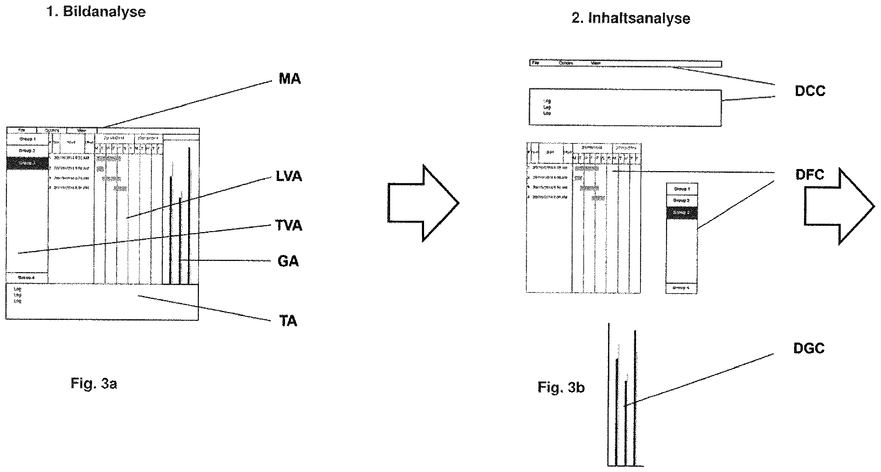

Gemäß Fig. 3a werden in dem Bild bzw. Frame der grafischen Benutzeroberfläche DUI die Desktop-Bildkomponenten in Form von Desktop-Inhaltsbereichen durch Mustererkennung identifiziert. Die Desktop-Inhaltsbereiche umfassen gemäß Fig. 3a rein beispielhaft einen Menübereich MA, einen Listenansicht-Bereich LVA, einen Baumansicht-Bereich TVA, einen Textbereich TA sowie einen Grafikbereich GA.

In einem Verfahrensschritt S2 werden die identifizierten Desktop-Inhaltsbereiche MA, LVA, TVA, GA, TA analysiert.

Mittels eines Musterabgleichs (Pattern Matching) können in jedem der Desktop-Inhaltsbereiche benutzermanipulierbare Desktop-Steuerkomponenten wie Bildsymbole für Dateien und Programme (Icons), Schaltflächen (Buttons), Schieberegler (Scroll bars), Werkzeugleisten (Tool bars), Menüleisten (Menu bars) und/oder Dialogboxen, benutzermanipulierbare dynamische Desktop-Funktionskomponenten wie Baumstrukturen und/oder Listenstrukturen und/oder statische Desktop-Grafikkomponenten als Desktop-Bildkomponenten identifiziert werden

Bei der Analyse der Inhaltsbereiche gemäss Fig. 3b werden die Eigenschaftsinformationen der Desktop-Bildkomponenten in Form von Informationen über einen Typ, einen Status, eine Position, eine Bezeichnung, einen Textbereich, eine zeitliche Statusänderung und/oder eine genaue Größe der Darstellung der Desktop-Bildkomponente auf dem Desktop-Bildschirm ermittelt.

Mittels eines Bildabgleichs (Binary Matching) kann auch der Zustand unbekannter Abschnitte bzw. Bereiche, wie beispielsweise Diagramme, Bilder usw., erfasst werden.

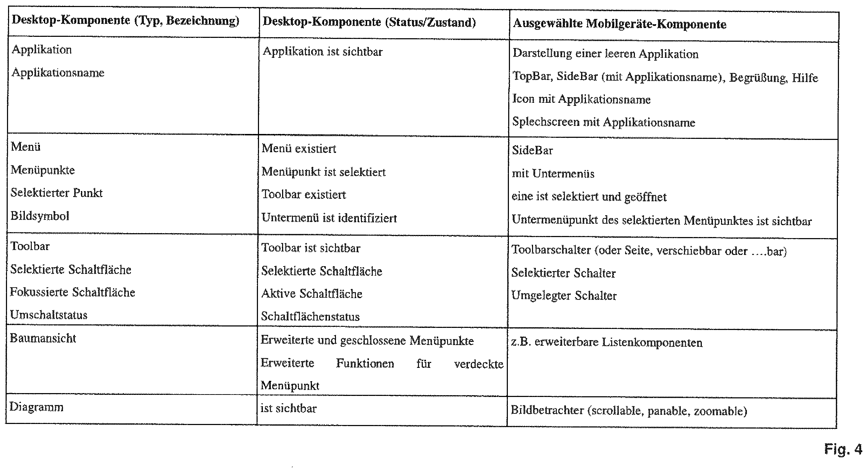

Beispielhaft sind die Eigenschaftsinformationen in Form von Typ und Status der identifizierten Desktop-Inhaltsbereiche oder Desktop-Komponenten DFC, DCC, DGC sowie äquivalente Mobilgeräte-Komponenten MFC, MCC, MGC einer Tabelle gemäß Fig. 4 aufgelistet. Die Tabelle dient zur Zuordnung bzw. Abbildung der identifizierten Desktop-Komponenten auf die korrespondierenden vordefinierten Mobilgeräte-Komponenten.

Aus den Verfahrensschritten S1 und S2 stehen somit folgende Eigenschaftsinformationen zur Verfügung:
- Typ der identifizierten Desktop-Inhaltsbereiche und Desktop-Komponenten,
- Status der identifizierten Desktop-Inhaltsbereiche und Desktop-Komponenten,
- Position der identifizierten Desktop-Inhaltsbereiche und Desktop-Komponenten des Desktop-Bildschirms,
- Beschriftung und Textbereiche,
- Status und Änderungen von Steuerelementen über die Zeit sowie
- genaue Bildschirmgröße des ursprünglichen Bildschirms (Desktop Bildschirm).

Unter Berücksichtigung obiger Eigenschaftsinformationen kann sodann für jeden identifizierten Desktop-Inhaltsbereich und/oder für jedes identifizierte Desktopsteuer-, Desktopfunktions- und/oder Desktopgrafikelement eine äquivalentes Mobilgerätesteuer-, Mobilgerätefunktions- und/oder Mobilgerätegrafikkomponente MCC, MFC, MGC für die grafische Benutzeroberfläche MUI des mobilen Gerätes MD erzeugt werden.

Unter Berücksichtigung zuvor definierter Mustererkennungsinformationen zur Muster- und Statuserfassung sowie den Eigenschaftsinformationen können die äquivalenten und ausführbaren Mobilgeräte-Komponenten MUIC aus den in der Bibliothek gespeicherten Quellcode-Vorlagen UIT (User Interface Templates) selektiert werden.

Bei der Transformation der identifizierten Inhaltsbereiche und/oder der identifizierten Komponenten DCC, DFC und DGC in die äquivalenten Mobilgeräte-Komponenten MCC, MFC und MGC wird ein Artefakt (ein Modellelement für ein Ergebnis aus einem Arbeitsprozess), in z.B. einer XML/JSON Sprache, verwendet, in dem beschrieben ist, welcher Input in Form von Eigenschaftsinformationen eine spezifische Mobilgeräte-Steuer-, Mobilgeräte-Funktions- und/oder Mobilgeräte-Grafikkomponente MCC, MFC, MGC generiert.

In den Verfahrensschritten S3 und S4 wird aus den einzelnen äquivalenten bzw. spezifischen und für sich ausführbaren Mobilgeräte-Steuer-, -Funktions- und/oder -Grafikkomponenten MCC, MFC, MGC die gesamte ausführbare grafische Benutzeroberfläche MUI des mobilen Gerätes generiert, die sodann auf dem Display des mobilen Gerätes MD angezeigt werden kann.

Zum Verfahrensschritt S4 ist anzumerken, dass die Erzeugung / Generierung der grafischen Benutzeroberfläche MUI des mobilen Gerätes MD aus den spezifischen Mobilgeräte-Steuer-, Mobilgeräte-Funktions- und/oder Mobilgeräte-Grafikkomponenten MCC, MFC, MGC zunächst die Erzeugung einer Hauptmenüansicht umfasst, die den Anwendungstyp, den Namen der Anwendung sowie die Menüpunkte der Desktop-Anwendung repräsentiert.

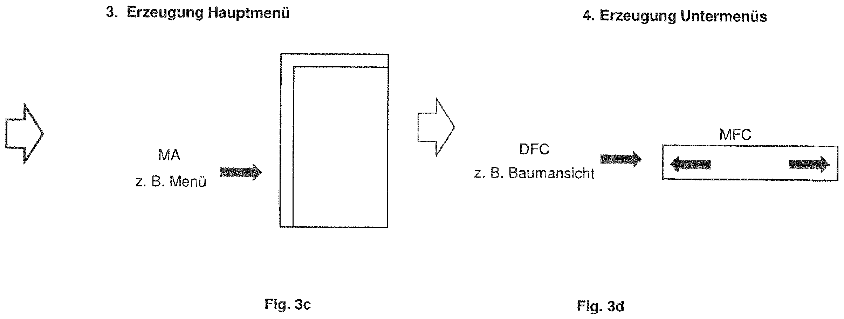

Gemäß Fig. 3c wird dabei insbesondere eine zunächst leere mobile Applikation mit Topbar, Sidebar, vorzugsweise mit Name der Applikation sowie ein Bildelement mit Applikationsname generiert.

In Fig. 3d ist dargestellt, wie in einem weiteren Schritt sodann Untermenüs mit spezifischen Mobilgeräte-Steuer- und Mobilgeräte-Funktionskomponenten MCC, MFC in Form von Schaltflächen, Schiebereglern, Baumansichten, Listenansichten erzeugt werden.

In dem Verfahrensschritt S5 erfolgt eine Abfrage, ob die grafische Benutzeroberfläche MUI des mobilen Gerätes MD ursprünglich angefragt wurde. Bejahendenfalls wird die generierte grafische Benutzeroberfläche MUI in Verfahrensschritt S6 in das mobile Gerät MD geladen bzw. auf dem Display angezeigt, wenn die Generierung im mobilen Gerät erfolgte. Andernfalls erfolgt in einem Verfahrensschritt S7 ein Update einer vorhandenen grafischen Benutzeroberfläche MUI, die bereits zuvor auf dem Display des mobile Geräts MD angezeigt wurde.

In einem Verfahrensschritt S8 werden Benutzerinteraktionen wie Betätigung von Bedienelementen oder sonstige Benutzer-manipulierte Eingaben mittels des Event-Emitter-Tools EET erfasst und in Verfahrensschritt S9 transformiert und an die Desktop-Anwendung DA gesendet. Bei der Erfassung der Benutzerinteraktion wird festgestellt, welche Mobilgeräte-Komponente betätigt wurde. Unter Berücksichtigung der Mustererkennungsinformationen kann die Benutzerinteraktion in entsprechende Bildkoordinaten für die äquivalente Desktop-Komponente auf dem Bildschirm der Desktop-Anwendung transformiert werden, so dass eine Aktivierung der äquivalenten Desktop-Komponente ausgeführt werden kann.

In Verfahrensschritt S10 werden die Benutzerinteraktionen in der grafischen Benutzeroberfläche DUI der Desktop-Anwendung DA ausgeführt, wodurch sich die grafische Benutzeroberfläche DUI der Desktop-Anwendung DA ändert.

Da die Bilder der grafischen Benutzeroberfläche DUI der Desktop-Anwendung DA in Verfahrensschritt S1 mittels des Streaming-Clients SC in den Bildanalysator gestreamt werden, wird das Bild der aktuellen grafischen Desktop-Benutzeroberfläche DUI nach Ausführung der Benutzerinteraktion erneut analysiert und auf der Grundlage der Analyse durch die Verfahrensschritte S2, S3 und S4 eine aktualisierte, grafische Benutzeroberfläche MUI für das mobile Gerät MD generiert. Diese wird gemäß Verfahrensschritt S6 in dem mobilen Gerät MD aktualisiert.

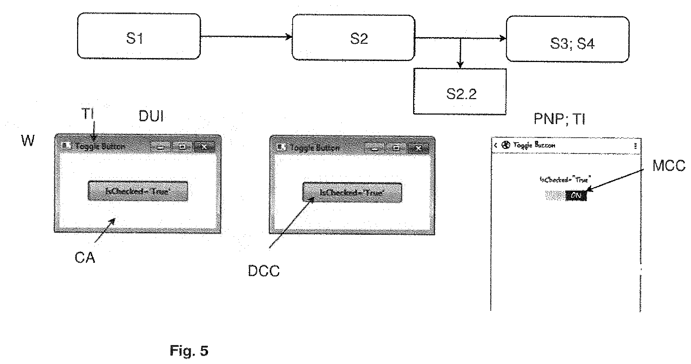

Fig. 5 zeigt rein beispielhaft die Verfahrensschritte S1 bis S4 zur Transformation einer Desktop-Steuerkomponente DCC aus dem Desktop-Inhaltsbereichs CA in eine entsprechende Mobilgeräte-Steuerkomponente MCC der Benutzeroberfläche MUI der mobilen Applikation MA. Im Verfahrensschritt S1 wird ein Bild der grafischen Benutzeroberfläche DUI der Desktop-Anwendung analysiert. Das dargestellte Beispiel zeigt ein geöffnetes Fenster W mit dem Titel TI "Toggle Button". In einem zu überprüfenden Inhaltsbereich CA ist die Steuerkomponente DCC der Desktop-Anwendung dargestellt.

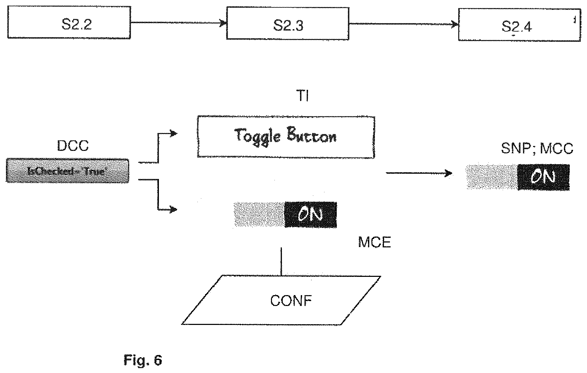

Im Verfahrensschritt S2 wird der Desktop-Inhaltsbereich CA analysiert, wobei die Desktop-Steuerkomponente DCC identifiziert wird. Sodann erfolgt in Verfahrensschritt S2.2 ein Komponentenabgleich (Component Matching), der genauer in Fig. 6 dargestellt ist.

Die identifizierte Steuerkomponente DCC wird mittels eines Musterabgleichs mit den gespeicherten Mustererkennungsinformationen PMI analysiert, um eine entsprechende Mobilgeräte-Steuerkomponente MCC für die grafische Benutzeroberfläche MUI des mobilen Gerätes MD zu kreieren. Der Abgleich (Matching) kann mittels einer Konfigurationsdatei CONF konfiguriert werden. Ergänzend zu der Mobilgeräte-Steuerkomponente MCC wird auch der Titel TI "Toggle Button" der Anwendung generiert. Gemäß Verfahrensschritt S2.4 werden die Text- und Mobilgeräte-Steuerkomponenten TI, MCC basierend auf der Konfigurationsdatei ausgewählt und in der grafischen Benutzeroberfläche MUI des mobilen Gerätes MD angezeigt, wie dies in den Verfahrensschritten S3 und S4 zuvor erläutert wurde.

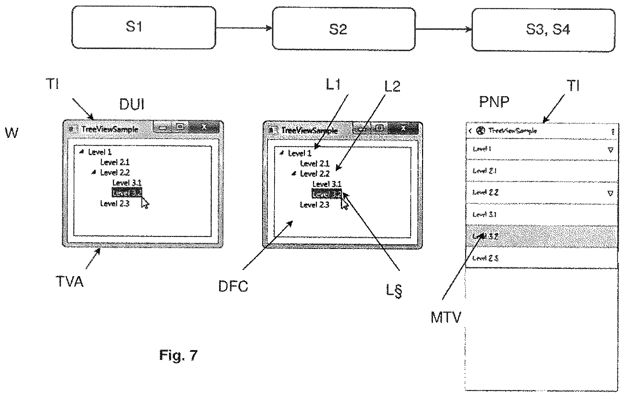

Fig. 7 zeigt die Verfahrensschritte S1 bis S4 zur Transformation einer Desktop-Funktionskomponente DFC wie Baumansicht-Komponente in eine entsprechende Mobilgeräte-Funktionskomponente MFC der mobilen Applikation MA. Im Verfahrensschritt S1 wird das Fenster W der grafischen Benutzeroberfläche DUI der Desktop-Anwendung DA analysiert, wobei der Titel TI "TreeView Sample" der Anwendung sowie der Inhaltsbereich TVA in Form einer Baumansicht identifiziert wird. Im Verfahrensschritt S2 wird der Inhalt des Inhaltsbereichs TVA analysiert, wobei mittels Musterabgleich eine Baumansicht-Komponente DFC erkannt wird. Die Baumansicht-Komponente DFC zeigt mehrere Level L1, L2, L3, wobei ein selektiertes Level L3.2 markiert ist. Aus den durch die Analyse erhaltenen Informationen wird zunächst ein Mobilgeräte-Hauptmenü PNP in Form eines Fensters mit dem Titel der Anwendung und einer Menüstruktur erzeugt. Die Baumansicht-Komponente DFC der Desktop-Anwendung DA wird in einem Mobilgeräte-Untermenü SNP in Form der entsprechenden Mobilgeräte-Funktionskomponente MFC wie Liste dargestellt, in der die einzelnen Level L1, ..., L3 untereinander angeordnet sind.

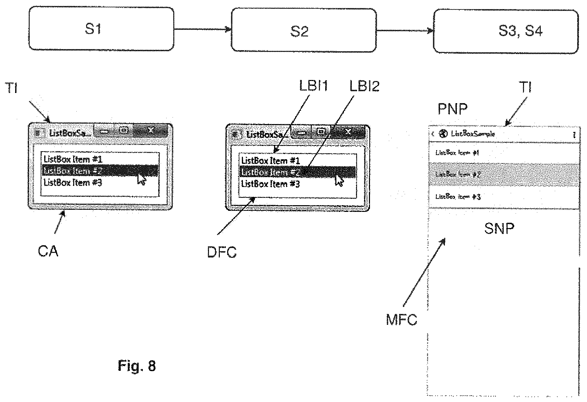

Fig. 8 zeigt die Verfahrensschritte S1 bis S4 zur Transformation einer Desktop-Funktionskomponente DFC in Form einer Listenansicht-Komponente der Desktop-Anwendung DA.

Im Verfahrensschritt S1 erfolgt die Analyse des Titels TI "ListBox Sample" sowie eine Analyse des Inhaltsbereichs CA.

Im Verfahrensschritt S2 wird die Desktop-Funktionskomponente DFC der Desktop-Anwendung DA identifiziert und festgestellt, welche und wie viele Listeneinträge LBI1,..., LBI3 vorhanden und ob selektierte Listeneinträge LBI2 enthalten sind. In den Verfahrensschritten S3 und S4 erfolgt zunächst die Erzeugung eines Mobilgeräte-Hauptmenüs PNP mit Titel TI sowie eines Mobilgeräte-Untermenüs SNP mit den Listeneinträgen LBI1,..., LBI3 sowie dem markierten Listeneintrag LBI2.

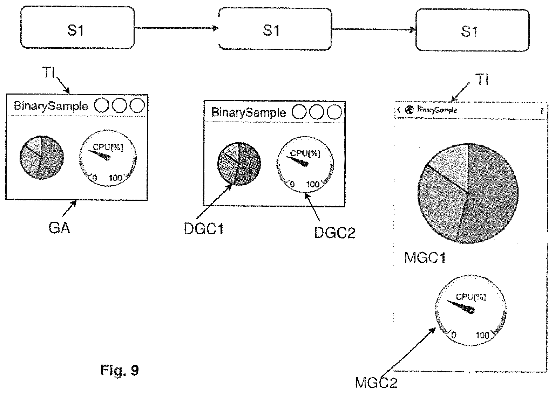

Fig. 9 zeigt die Verfahrensschritte S1 bis S4 zur Transformation einer Desktop-Grafikkomponente mit den Bildkomponenten DGC1 und DGC2 der grafischen Benutzeroberfläche DUI der Desktop-Anwendung DA. Im Verfahrensschritt S1 werden der Titel TI "BinarySample" sowie der Inhaltsbereich GA identifiziert.

Im Verfahrensschritt S2 wird der Inhaltsbereich GA analysiert und die Bildkomponenten DGC1 und DGC2 erkannt. Aus dem Titel TI "BinarySample" der Desktop-Anwendung wird das Mobilgeräte-Hauptmenü PNP erzeugt, d.h. eine leere Anwendung, in der die entsprechenden Bildelemente MGC1 und MGC2 dargestellt werden.

## Patentansprüche

1. Verfahren zum Generieren einer mobilen Applikation mit einer auf einem Display eines mobilen Gerätes darstellbaren interaktiven grafischen Benutzeroberfläche aus einer auf einem Datenverarbeitungsgerät ausgeführten Desktop-Anwendung,
umfassend die Verfahrensschritte:
Erfassen einzelner Bilder einer grafischen Benutzeroberfläche der Desktop-Anwendung,
Analyse der Bilder mittels Mustererkennung und Gliedern der Bilder in Desktop-Bildkomponenten,
Analyse der Desktop-Bildkomponenten mittels Mustererkennung und Erfassen von Eigenschaftsinformationen der Desktop-Bildkomponenten,
Transformieren der Desktop-Bildkomponenten durch Abbilden dieser auf vordefinierte, äquivalente, an die Größe des Displays des mobilen Gerätes angepasste ausführbare Mobilgeräte-Komponenten mittels der Eigenschaftsinformationen und Mustererkennungsinformationen,
Generieren der ausführbaren grafischen Benutzeroberfläche der mobilen Applikation aus den zugeordneten Mobilgeräte-Komponenten,
**dadurch gekennzeichnet,**
**dass** die Bilder als Videobilder in Form eines Videostreams der grafischen Benutzeroberfläche der ausgeführten Desktop-Anwendung erfasst werden, dass die bei der Mustererkennung erfassten Eigenschaftsinformationen einen Typ, einen Status, eine Position, eine Bezeichnung, einen Textbereich, eine zeitliche Statusänderung und/oder eine genaue Größe der Darstellung der Desktop-Bildkomponente auf dem Desktop-Bildschirm enthalten, dass eine Benutzerinteraktion mit einer der ausführbaren Mobilgeräte-Komponenten erfasst, unter Berücksichtigung der Mustererkennungsinformationen in eine entsprechende Bildkoordinate der Desktop-Anwendung transformiert und zur Ausführung der zugeordneten Desktop-Komponente an die Desktop-Anwendung gesendet wird, wobei die Benutzerinteraktion in der grafischen Benutzeroberfläche der Desktop-Anwendung ausgeführt und eine aktualisierte und/oder neue ausführbare Mobilgeräte-Komponente für die mobile Applikation im laufenden Betrieb aus einem aktualisierten Videobild des Videostreams als Reaktion auf die Benutzerinteraktion generiert wird.

2. Verfahren nach Anspruch 1,
**dadurch gekennzeichnet,**
**dass** das Videobild in Desktop-Inhaltsbereiche in Form von Anwendungsrahmen, Menübereichen, Textbereichen, Baumstrukturbereichen, Liststrukturbereichen und/oder Grafikbereichen als Desktop-Bildkomponenten gegliedert wird und dass in jedem der Desktop-Inhaltsbereiche benutzermanipulierbare Desktop-Steuerkomponenten, wie Bildsymbole für Dateien und Programme, Schaltflächen, Schieberegler, Werkzeugleisten, Menüleisten und/oder Dialogboxen, benutzermanipulierbare dynamische Desktop-Funktionskomponenten, wie Baumstrukturen und/oder Listenstrukturen, und/oder statische Desktop-Grafikkomponenten als Desktop-Bildkomponenten identifiziert werden.

3. Verfahren nach Anspruch 1 oder 2,
**dadurch gekennzeichnet,**
**dass** die durch Mustererkennung identifizierten Desktop-Bildkomponenten mittels einer Abbildungsdatei, wie Abbildungsmatrix, unter Berücksichtigung der Mustererkennungsinformationen und/oder Eigenschaftsinformationen auf die vordefinierten Mobilgeräte-Komponenten abgebildet werden.

4. Verfahren nach zumindest einem der vorhergehenden Ansprüche,
**dadurch gekennzeichnet,**
**dass** die vordefinierten Mobilgeräte-Komponenten in Form von Quellcode-Vorlagen aus Basis-Bildkomponenten erstellt werden, die bei einer Bildanalyse von Videobildern verschiedener Zustände der grafischen Benutzeroberfläche der Desktop-Anwendung identifiziert werden.

5. Verfahren nach zumindest einem der vorhergehenden Ansprüche,
**dadurch gekennzeichnet,**
**dass** in einem ersten Schritt der Bildanalyse ein Desktop-Inhaltsbereich in Form eines Anwendungsrahmens mit Anwendungstitel identifiziert wird, dass in einem zweiten Schritt in dem Desktop-Inhaltsbereich das Desktop-Steuer-, Desktop-Funktions- und/oder Desktop-Grafikelement identifiziert wird, dass in einem dritten Schritt der Anwendungsrahmen mit Anwendungstitel in einen äquivalenten Mobilgeräte-Anwendungsrahmen mit Anwendungstitel transformiert wird und dass in einem vierten Schritt das identifizierte Desktop-Steuer-, Desktop-Funktions- und/oder Desktop-Grafikelement in ein äquivalentes ausführbares Mobilgeräte-Steuer-, Mobilgeräte-Funktions- und/oder Mobilgeräte-Grafikelement transformiert wird.

6. Verfahren nach zumindest einem der vorhergehenden Ansprüche,
**dadurch gekennzeichnet,**
**dass** die Mustererkennungsinformationen und/oder Eigenschaftsinformationen durch eine Konfigurationsdatei bereitgestellt und für eine manuelle Analyse und/oder Transformation und/oder Generierung unbekannter Desktop-Bildelemente aus dieser geladen werden.

7. Verfahren nach zumindest einem der vorhergehenden Ansprüche,
**dadurch gekennzeichnet,**
**dass** die Analyse der Videobilder, die Transformation der Desktop-Bildkomponenten und/oder Generierung der mobilen Applikation mittels einer Prozessoreinheit in einem Computergerät, einer Cloud-Umgebung oder in dem mobilen Gerät selbst ausgeführt wird.

8. Datenverarbeitungssystem zum Generieren einer mobilen Applikation (MA) mit einer auf einem Display eines mobilen Gerätes (MD) darstellbaren interaktiven grafischen Benutzeroberfläche (MUI) aus einer auf einem Datenverarbeitungsgerät (DC) ausgeführten Desktop-Anwendung (DA), umfassend:
eine Erfassungseinheit (CS) zum Erfassen einzelner Bilder einer grafischen Benutzeroberfläche (DUI) der Desktop-Anwendung (DA);
eine Analyseeinheit (DUIA) zur Analyse der Bilder mittels Mustererkennung und zum Gliedern der Bilder in Desktop-Bildkomponenten (DFC, DCC, DGC), sowie zur Analyse der Desktop-Bildkomponenten mittels Mustererkennung und zum Erfassen von Eigenschaftsinformationen der Desktop-Bildkomponenten;
eine Transformationseinheit zum Transformieren der Desktop-Bildkomponenten (DFC, DCC, DGC) durch Abbilden dieser auf vordefinierte, äquivalente, an die Größe des Displays des mobilen Gerätes angepasste ausführbare Mobilgeräte-Komponenten (MFC, MCC, MGC) mittels der Eigenschaftsinformationen und Mustererkennungsinformationen;
eine Generatoreinheit (MUIG) zum Generieren der ausführbaren grafischen Benutzeroberfläche der mobilen Applikation (MA) aus den zugeordneten Mobilgeräte-Komponenten (MFC, MCC, MGC);
**dadurch gekennzeichnet,**
**dass** die Erfassungseinheit (CS) eine Bilderfassungseinheit in Form eines Streaming-Clients ist, mittels dem einzelne Videobilder der grafischen Benutzeroberfläche der ausgeführten Desktop-Anwendung in Form eins Videostreams erfassbar sind, dass die Datenverarbeitungseinheit eine Erfassungseinheit (EET) in Form eines Event-Emitter-Tools aufweist, die ausgebildet ist, eine Benutzerinteraktion mit einer der ausführbaren Mobilgeräte-Komponenten (MFC, MCC, MGC) zu erfassen, unter Berücksichtigung der Mustererkennungsinformationen in eine entsprechende Bildkoordinate der Desktop-Anwendung zu transformieren und zur Ausführung der zugeordneten Desktop-Komponente (DFC, DCC, DGC) an die Desktop-Anwendung zu senden, und als Reaktion auf die Benutzerinteraktion eine aktualisierte und/oder neue ausführbare Mobilgeräte-Komponente (MFC, MCC, MGC) für die mobile Applikation im laufenden Betrieb aus einem aktualisierten Videobild des Videostreams zu generieren.

9. System nach Anspruch 8,
**dadurch gekennzeichnet,**
**dass** das Datenverarbeitungssystem in dem mobilen Gerät installiert ist.

10. System nach Anspruch 9,
**dadurch gekennzeichnet,**
**dass** das Datenverarbeitungssystem in einer Cloud-Umgebung installiert ist.

## Claims

1. Method for generating a mobile application with an interactive graphical user interface displayable on a display of a mobile device from a desktop application executed on a data processing device,
comprising the method steps:
capturing individual images of a graphical user interface of the desktop application,
analyzing the images by pattern recognition and dividing the images into desktop image components,
analyzing the desktop image components by pattern recognition and capturing property information of the desktop image components,
transforming the desktop image components by mapping them to predefined equivalent mobile device executable components adapted to the size of the display of the mobile device using the property information and pattern recognition information,
generating the mobile application executable graphical user interface from the mapped mobile device components,
**chracterized in**,
that the images are captured as video images in the form of a video stream of the graphical user interface of the executable desktop application,
that the property information captured during pattern recognition includes a type, a status, a position, a label, a text area, a change in status over time and/or an exact size of the desktop image component's representation on the desktop screen,
that a user interaction with one of the executable mobile device components is captured transformed into a corresponding desktop application image coordinate in consideration of the pattern recognition information and sent to the desktop application for execution of the associated desktop component, wherein the user interaction is executed in the desktop application graphical user interface and an updated and/or new mobile device executable component for the mobile application is generated on the fly from an updated video image of the video stream in response to the user interaction.

2. Method according to claim 1,
**characterized in,**
**that** the video image is divided into desktop content areas in the form of application frames, menu areas, text areas, tree structure areas, list structure areas and/or graphics areas as desktop image components, and that in each of the desktop content areas user-manipulable desktop control components such as icons for files and programs, buttons, sliders, toolbars, menu bars and/or dialog boxes, user-manipulable dynamic desktop function components such as tree structures and/or list structures and/or static desktop graphics components are identified as desktop image components.

3. Method according to claim 1 or 2,
**characterized in**
**that** the desktop image components identified by pattern recognition are mapped onto the predefined mobile device components by means of a mapping file such as a mapping matrix taking into account the pattern recognition information and/or property information.

4. Method according to at least one of the preceding claims,
**characterized in**
**that** the predefined mobile device components are created in the form of source code templates from basic image components identified in an image analysis of video images of different states of the graphical user interface of the desktop application.

5. Method according to at least one of the preceding claims,
**characterized in**
**that**, in a first step of the image analysis, a desktop content area in the form of an application frame with application title is identified, that, in a second step, the desktop control, desktop function and/or desktop graphic element is identified in the desktop content area, that in a third step the application frame with application title is transformed into an equivalent mobile device application frame with application title, and that in a fourth step the identified desktop control, desktop function and/or desktop graphic element is transformed into an equivalent executable mobile device control, mobile device function and/or mobile device graphic element.

6. Method according to at least one of the preceding claims,
**characterized in**
**that** the pattern recognition information and/or property information is provided by a configuration file and loaded therefrom for manual analysis and/or transformation and/or generation of unknown desktop image elements.

7. Method according to at least one of the preceding claims,
**characterized in**
**that** the analysis of the video images, the transformation of the desktop image components and/or generation of the mobile application is performed by means of a processor unit in a computing device, a cloud environment or in the mobile device itself.

8. Data processing system for generating a mobile application (MA) having an interactive graphical user interface (MUI) displayable on a display of a mobile device (MD) from a desktop application (DA) executing on a data processing device (DC), comprising:
a capture unit (CS) for capturing individual images of a graphical user interface (DUI) of the desktop application (DA);
an analysis unit (DUIA) for analyzing the images by pattern recognition and dividing the images into desktop image components (DFC, DCC, DGC), and analyzing the desktop image components by pattern recognition and acquiring property information of the desktop image components;
a transformation unit for transforming the desktop image components (DFC, DCC, DGC) by mapping them to predefined equivalent mobile device executable components (MFC, MCC, MGC) adapted to the size of the display of the mobile device by means of the property information and pattern recognition information;
a generator unit (MUIG) for generating the mobile application executable graphical user interface (MA) from the associated mobile device components (MFC, MCC, MGC);
**characterized in,**
**that** the capture unit (CS) is an image capture unit in the form of a streaming client, by means of which individual video images of the graphical user interface of the executed desktop application can be captured in the form of a video stream, that the data processing unit has a capture unit (EET) in the form of an event emitter tool, which is designed to capture a user interaction with one of the executable mobile device components (MFC, MCC, MGC) transforming it into a corresponding image coordinate of the desktop application, taking into account the pattern recognition information, and sending it to the desktop application for execution of the associated desktop component (DFC, DCC, DGC), and generating an updated and/or new executable mobile device component (MFC, MCC, MGC) for the mobile application on the fly from an updated video image of the video stream in response to the user interaction.

9. System according to claim 8,
**characterized in**
**that** the data processing system is installed in the mobile device.

10. System according to claim 9,
**characterized in**
**that** the data processing system is installed in a cloud environment.

## Revendications

1. Procédé de génération d'une application mobile avec une interface utilisateur graphique interactive pouvant être représentée sur un écran d'un appareil mobile à partir d'une application bureau exécutée sur un appareil de traitement de données,
comprenant les étapes de procédé :
capture d'images individuelles d'une interface utilisateur graphique de l'application bureau,
analyse des images à l'aide de la reconnaissance des formes et agencement des images en composants d'images de bureau,
analyse des composants d'images de bureau au moyen de la reconnaissance des formes et saisie d'informations de propriétés des composants d'images de bureau,
transformation des composants d'images de bureau en les mappant sur des composants mobiles exécutables prédéfinis et équivalents, adaptés à la taille de l'écran de l'appareil mobile, au moyen des informations de propriétés et des informations de reconnaissance des formes,
génération de l'interface utilisateur graphique exécutable de l'application mobile à partir des composants de l'appareil mobile associés,
**caractérisé en ce**
**que** les images sont saisies en tant qu'images vidéo sous la forme d'un flux vidéo de l'interface utilisateur graphique de l'application bureau exécutée, que les informations de propriété saisies lors de la reconnaissance des formes contiennent un type, un état, une position, une désignation, une zone de texte, un changement d'état dans le temps et/ou une taille précise de la représentation du composant d'image de bureau sur l'écran de bureau, qu'une interaction de l'utilisateur avec l'un des composants de l'appareil mobile exécutables est saisie, est transformée en une coordonnée d'image correspondante de l'application bureau en tenant compte des informations de reconnaissance des formes et est envoyée à l'application bureau pour l'exécution du composant de bureau associé, sachant que l'interaction de l'utilisateur est exécutée dans l'interface utilisateur graphique de l'application bureau et un composant de l'appareil mobile exécutable mis à jour et/ou nouveau pour l'application mobile est généré en cours de fonctionnement à partir d'une image vidéo mise à jour du flux vidéo en réponse à l'interaction de l'utilisateur.

2. Procédé selon la revendication 1,
**caractérisé en ce**
**que** l'image vidéo est structurée en zones de contenu de bureau sous la forme de cadres d'application, de zones de menu, de zones de texte, de zones de structure arborescente, de zones de structure de liste et/ou de zones graphiques sous forme de composants d'image de bureau et **en ce que**, dans chacune des zones de contenu de bureau, des composants de commande de bureau manipulables par l'utilisateur, tels que des icônes d'image pour des fichiers et des programmes, des boutons, des curseurs, des barres d'outils, des barres de menu et/ou des boîtes de dialogue, des composants fonctionnels de bureau dynamiques manipulables par l'utilisateur, tels que des structures arborescentes et/ou des structures de liste et/ou des composants graphiques de bureau statiques, sont identifiés en tant que composants d'images de bureau.

3. Procédé selon la revendication 1 ou 2,
**caractérisé en ce**
**que** les composants d'images de bureau identifiés par reconnaissance des formes sont mappés sur les composants de l'appareil mobile prédéfinis au moyen d'un fichier de mappage tel qu'une matrice de mappage, en tenant compte des informations de reconnaissance des formes et/ou des informations de propriétés.

4. Procédé selon au moins l'une des revendications précédentes,
**caractérisé en ce**
**que** les composants de l'appareil mobile prédéfinis sont créés sous la forme de modèles de code source à partir de composants d'image de base qui sont identifiés lors d'une analyse d'images vidéo de différents états de l'interface utilisateur graphique de l'application bureau.

5. Procédé selon au moins l'une des revendications précédentes,
**caractérisé en ce**
**que**, au cours d'une première étape de l'analyse d'image, une zone de contenu de bureau est identifiée sous la forme d'un cadre d'application avec un titre d'application, **en ce que**, au cours d'une deuxième étape, l'élément de commande de bureau, l'élément fonctionnel de bureau et/ou l'élément graphique de bureau sont identifiés dans la zone de contenu de bureau, que, au cours d'une troisième étape, le cadre d'application avec titre d'application est transformé en un cadre d'application mobile équivalent avec titre d'application et que, au cours d'une quatrième étape, l'élément de commande de bureau, l'élément fonctionnel de bureau et/ou l'élément graphique de bureau identifié est transformé en un élément de commande mobile, un élément fonctionnel mobile et/ou un élément graphique mobile exécutable équivalent.

6. Procédé selon au moins l'une des revendications précédentes,
**caractérisé en ce**
**que** les informations de reconnaissance des formes et/ou les informations de propriétés sont fournies par un fichier de configuration et chargées à partir de celui-ci pour une analyse et/ou une transformation et/ou une génération manuelle de pixels de bureau inconnus.

7. Procédé selon au moins l'une des revendications précédentes,
**caractérisé en ce**
**que** l'analyse des images vidéo, la transformation des composants d'image de bureau et/ou la génération de l'application mobile sont effectuées au moyen d'une unité de traitement dans un appareil informatique, un environnement en nuage ou dans l'appareil mobile lui-même.

8. Système de traitement de données pour générer une application mobile (MA) avec une interface utilisateur graphique interactive (MUT) pouvant être représentée sur un écran d'un appareil mobile (MD) à partir d'une application de bureau (DA) exécutée sur un appareil de traitement de données (DC), comprenant :
une unité de capture (CS) pour capturer des images individuelles d'une interface utilisateur graphique (DUI) de l'application bureau (DA) ;
une unité d'analyse (DUIA) pour analyser les images au moyen de la reconnaissance des formes et pour structurer les images en composants d'images de bureau (DFC, DCC, DGC) ainsi que pour analyser les composants d'images de bureau au moyen de la reconnaissance des formes et pour saisir des informations de propriétés des composants d'images de bureau :
une unité de transformation pour transformer les composants d'image de bureau (DFC, DCC, DGC) en les mappant sur des composants de l'appareil mobile exécutables prédéfinis et équivalents (MFC, MCC, MGC) adaptés à la taille de l'écran de l'appareil mobile au moyen des informations de propriétés et des informations de reconnaissance des formes ;
une unité de génération (MUIG) pour générer l'interface utilisateur graphique exécutable de l'application mobile (MA) à partir des composants d'appareil mobile associés (MFC, MCC, MGC) ;
**caractérisé en ce**
**que** l'unité de capture (CS) est une unité de capture d'images sous la forme d'un client de diffusion en flux au moyen duquel des images vidéo individuelles de l'interface utilisateur graphique de l'application de bureau exécutée peuvent être capturées sous la forme d'un flux vidéo, que l'unité de traitement des données présente une unité de capture (EET) sous la forme d'un outil émetteur d'événements, qui est conçue pour capturer une interaction de l'utilisateur avec l'un des composants de l'appareil mobile exécutables (MFC, MCC, MGC), pour la transformer en une coordonnée d'image correspondante de l'application de bureau en tenant compte des informations de reconnaissance des formes et pour l'envoyer à l'application bureau pour l'exécution du composant de bureau associé (DFC, DCC, DGC) et, en réponse à l'interaction de l'utilisateur, pour générer un composant de l'appareil mobile (MFC, MCC, MGC) actualisé et/ou nouveau et exécutable pour l'application mobile en cours de fonctionnement à partir d'une image vidéo actualisée du flux vidéo.

9. Système selon la revendication 8,
**caractérisé en ce**
**que** le système de traitement de données est installé dans un appareil mobile.

10. Système selon la revendication 9,
**caractérisé en ce**
**que** le système de traitement de données est installé dans un environnement Cloud.
